Europäisches Patentamt

European Patent Office

Office européen des brevets

(19)

(11) Publication number: **0 168 929**
**B1**

(12) **EUROPEAN PATENT SPECIFICATION**

(45) Date of publication of patent specification: **04.05.88**

(51) Int. Cl.⁴: **F 16 H 55/56, F 16 H 11/00**

(21) Application number: **85303637.4**

(22) Date of filing: **23.05.85**

(54) Pressure compensation mechanism.

(30) Priority: **18.06.84 US 621857**

(43) Date of publication of application:
**22.01.86 Bulletin 86/04**

(45) Publication of the grant of the patent:
**04.05.88 Bulletin 88/18**

(84) Designated Contracting States:
**DE FR GB IT**

(56) References cited:
**EP-A-0 051 918**
**DE-A-1 816 950**
**FR-A-2 192 671**
**FR-A-2 330 920**
**FR-A-2 371 615**
**GB-A-2 064 686**

(73) Proprietor: **GENERAL MOTORS CORPORATION**
**General Motors Building 3044 West Grand Boulevard**
**Detroit Michigan 48202 (US)**

(72) Inventor: **Koivunen, Erkki Antero**
**15560 Westbrooke**
**Livonia Michigan 48154 (US)**

(74) Representative: **Breakwell, John Neil Bower et al**
**GM Patent Section Vauxhall Motors Limited Luton Office (F6) P.O. Box No. 3 Kimpton Road Luton Bedfordshire LU2 OSY (GB)**

Courier Press, Leamington Spa, England.

## Description

This invention relates to a pressure compensation mechanism as specified in the preamble of claim 1, for example as disclosed in FR—A—2 371 615.

A centrifugal pressure compensation mechanism for a variable-ratio pulley drive system is described for example in US—A—4 143 558. This prior pressure compensation mechanism utilises a single control piston.

In an effort to reduce the diameter of pulley drive systems while not increasing the pressure levels used in the control piston, it is advantageous to utilize dual control pistons. However, such systems do not readily lend themselves to the centrifugal pressure compensation mechanisms which are utilized with single control piston systems.

The present invention is concerned with a pressure compensation mechanism by means of which at least a portion of the centrifugal pressure force on a dual control piston system can be compensated.

To this end a pressure compensation mechanism in accordance with the present invention is characterised by the features specified in the characterising portion of claim 1.

In a pressure compensation mechanism in accordance with the present invention, the base pressure level within the pressure compensation mechanism can be controlled such that the total compensating pressure will be at a level higher than the centrifugal pressure alone. Such control can be effected by the use of flow control restrictions, one of which can be centrifugally responsive, for example a centrifugally actuated exhaust restriction, such that increased base pressure is achieved with increased rotary speed.

The resulting compensating force may act against the centrifugal forces generated on both of the control pistons.

In DE—A—1 816 950 a pressure control system for a variable-ratio drive pulley is disclosed which is effected by the use of a centrifugally responsive flow control restriction.

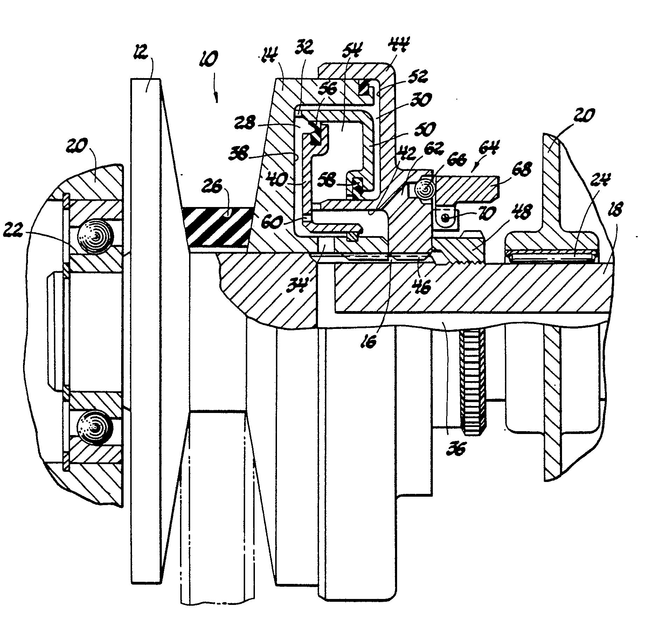

The single Figure of the drawing is a fragmentary elevational view of a drive pulley including one embodiment of a pressure compensation mechanism in accordance with the present invention, shown partially in section.

With reference now to the drawing, there is shown a variable-ratio drive pulley, generally designated 10, having a linearly fixed conical sheave 12 and a linearly movable conical sheave 14. The conical sheaves 12 and 14 are connected for unitary rotary drive by means of a spline 16 formed on a rotary drive shaft 18. The conical sheave 12 could alternatively be formed integral with the shaft 18. The shaft 18 is supported for rotation in a relatively stationary housing 20 by a ball bearing 22 and a roller bearing 24. The conical sheaves 12 and 14 cooperate to form a V-shaped portion of the pulley 10, in which is disposed a drive belt 26. The belt 26 is frictionally driven by the pulley 10 in well-known manner.

The drive forces between the pulley 10 and the belt 26 are controlled by the axial force imposed on the sheave 14. The belt 26 is connected in a similar manner to a second variable-ratio pulley arrangement, not shown. The second pulley arrangement may be constructed in a manner similar to the pulley 10, or in accordance with any of the well-known variable-ratio pulley mechanisms. The two pulleys and the belt together provide a variable-ratio power transmission mechanism.

The axial force imposed on the movable sheave 14 is generated by means of pressurized hydraulic fluid which is directed to a pair of chambers 28 and 30, the fluid entering the chamber 30 from the chamber 28 by way of a passage 32. The fluid enters the chamber 28 by way of a passage 34 which in turn receives fluid from a control passage 36 formed in the shaft 18. The pressure level in the fluid can be controlled by any of the well-known fluid pressure control systems used with variable-ratio belt drives.

The chamber 28 is bounded by an annular end wall 38 formed on the conical sheave 14, and by a separator wall 40. The annular end wall 38 effectively forms a piston member, and the separator wall 40 forms a reaction member. The reaction force on the separator wall 40 is absorbed by an annular sleeve or extension 42 formed on an annular housing 44 which is drivingly connected to shaft 18 by way of a spline 46 and is limited in its axial movement relative to the shaft 18 by a threaded fastener 48. The chamber 30 is bounded by an annular piston 50 and an annular end wall 52 formed in the housing 44.

The presence of fluid pressure in the chambers 28 and 30 will result in a leftward force on the sheave 14 from both the end wall 38 and the annular piston 50. These fluid pressures will result in rightward forces acting on the separator wall 40 and the end wall 52 of the housing 44. Thus, the necessary axial squeeze forces for the operation of the pulley 10 and the drive belt 26 can be established.

During rotation of the pulley 10, the pressure in the chambers 30 and 28 will increase due to the centrifugal forces generated, and the generation of these centrifugal forces will result in the axial loads that are imposed on the belt 26 being in excess of those required for power transmission.

To compensate for the centrifugal loading, a central compensating chamber 54 is provided. The chamber 54 is annular and is bounded by the separator wall 40 and the annular piston 50. The chamber 54 is sealed from fluid communication with the chamber 28 by an annular lip seal 56, and from communication with the chamber 30 by an annular lip seal 58. Fluid communication between the chamber 28 and the compensating chamber 54 is established by a restricted feed passage 60, whereby fluid can flow from the chamber 28 into the compensating chamber 54. During rotation of the pulley 10, this fluid will generate a centrifugal pressure in the chambers which will react on the annular piston 50 to compensate for the centrifugal pressure generated in the chamber 30.

The centrifugal pressure in the compensating chamber 54 will also act on the separator wall 40. However, since the separator wall 40 is only a reacting member, which is not in contact with the sheave 14, forces acting on it have no effect on the sheave 14.

The chamber 54 is connected to exhaust by way of a passage 62. The pressure in the passage 62 is controlled by a centrifugal valve, generally designated 64, which comprises a ball member 66 and a flyweight 68. The flyweight 68 rotates with the housing 44 and is pivotally mounted on a pin 70 so as to impose a centrifugally generated force on the ball 66. Therefore, the exhausting of fluid from the chamber 54 is controlled by the centrifugal valve 64, such that the base pressure in the compensating chamber 54 will increase with increasing speed of rotation.

Since the total compensating pressure in the compensating chamber 54 will be the sum of the base pressure plus the centrifugal pressure, the total compensating pressure in the chamber 54 will be greater than the centrifugally generated pressure in the chamber 30. The pressure compensation mechanism in accordance with the present invention will thereby provide centrifugal compensation for the pressure in the chamber 30, and at least partial centrifugal compensation for the pressure in the chamber 28. However, the whole of the compensating force will develop against the load on the annular piston 50, and be limited by the total hydraulic force on that piston.

Although only a single centrifugal valve 64 has been shown, a plurality of such valves can be equally spaced about the annular housing 44, if desired. If a fixed base pressure is desirable, a simple restricted outlet passage can be utilised which co-operates with the restricted feed passage 60 to establish a fixed base pressure level in the chamber 54. The base pressure level in the chamber 54 would then be established by the pressure in the chamber 28 and the size of the restricted passages.

## Claims

1. A pressure compensation mechanism for a dual-area control member in a rotary V-belt drive having adjustable pulleys with a drive belt, in which the mechanism comprises a movable pulley sheave (14) including a hub portion, a housing (44) mounted for unitary rotation with the pulley sheave (14) and secured for permitting relative linear movement thereof on the pulley sheave (14), a first annular piston (50) slidably disposed with respect to the housing (44) and co-operating with the housing (44) and the pulley sheave (14) to form a first pressure chamber (30), a separator wall (40) slidably disposed on the pulley sheave (14) and with respect to the first piston (50) and co-operating therewith to form a compensating chamber (54), a second pressure chamber (28) formed between an annular end wall (38) of the pulley sheave (14) and the separator wall (40), with the said end wall (38) being operative as a second annular piston, fluid feed passage means (34,32) for directing pressurized fluid to the first and second pressure chambers (30 and 28) and the first and second annular pistons (50 and 38) to load the pulley sheave (14) for movement relative to the housing (44), and a restricted-flow passage (60) for directing fluid to the compensating chamber (54), the restricted-flow passage (60) being in fluid communication with the pressurized fluid in one (28) of the pressure chambers (30 and 28), the fluid in the compensating chamber (54) being at a pressure level determined in part by the rotary speed of the movable pulley sheave (14) and acting on the first annular piston (50) in opposition to centrifugally generated fluid pressure in the pressure chambers (30 and 28), to thereby reduce the axial loading of the movable pulley sheave (14), characterised in that the first annular piston (50) is slidably disposed on the housing (44) and the separator wall (40) is slidably disposed on the pulley sheave (14) and the first piston (50), and the mechanism also comprises a second restricted-flow passage (62) for directing fluid from the compensating chamber (54).

2. A pressure compensation mechanism according to claim 1, characterised in that the second restricted-flow passage (62) includes centrifugally actuated valve means (64) for controlling the exhaust of fluid from the compensating chamber (54), with the fluid in the compensating chamber (54) acting on the first annular piston (50) in opposition to the pressure force in the first pressure chamber (30) to provide at least partial compensation for the centrifugally generated fluid pressure in the pressure chambers (30 and 28).

## Patentansprüche

1. Druckkompensierender Mechanismus für ein Dualflächen-Steuerelement bei einem Dreh-Keilriemenantrieb, der einstellbare Riemenscheiben mit einem Antriebsriemen besitzt, wobei der Mechanismus eine bewegbare Riemenscheiben-Seitenflanke (14) mit einem Nabeabschnitt besitzt, ein Gehäuse (44) zur einheitlichen Drehung mit der Riemenscheiben-Flanke (14) angebracht ist und befestigt zum Zulassen einer relativen Linearbewegung desselben an der Riemenscheiben-Flanke (14), ein erster Ringkolben (50) gleitend bezüglich des Gehäuses (44) eingesetzt ist und mit dem Gehäuse (44) und der Riemenscheiben-Flanke (14) zusammenwirkt, um eine erste Druckkammer (30) zu bilden, eine Trennwand (40) gleitend an der Riemenscheiben-Flanke (14) angeordnet ist, um mit Bezug auf den ersten Kolben (50) und mit diesem zusammenwirkend einer Komponensationskammer (54) zu bilden, mit einer zweiten Druckkammer (28), die zwischen einer ringförmigen Endwand (38) der Riemenscheiben-Flanke (14) und der Trennwand (40) gebildet ist, wobei die Endwand (38) als ein zweiter Ringkolben wirksam ist, mit Fluid-Zuführ-Durchlaßmittel (34, 32) zum Richten unter Druck stehenden Fluides zu der ersten und der zweiten Druckkammer (30 und 28) und dem ersten und zweiten Ringkolben (50 und 38), um die Riemenscheiben-Flanke (14) zu einer Bewegung relativ zu dem Gehäuse (44) unter Last zu setzen, und einem Durchlaß (60) mit begrenztem Durchfluß, um Fluid zu der Kompensationskammer (54) zu richten, wobei der Durchlaß (60) mit begrenztem Durchfluß in Fluidverbindung mit dem Druckfluid in einer (28) der Druckkammern (30 und 28) ist, das Fluid in der Kompensationskammer (54) bei einem Druckpegel ist, der teilweise durch die Rotationsgeschwindigkeit der bewegbaren Riemenscheiben-Flanke (14) bestimmt ist und auf den ersten Ringkolben (50) entgegengesetzt zu dem zentrifugal erzeugten Fluiddruck in den Druckkammern (30 und 28) ist, um dadurch die Axialbelastung der bewegbaren Riemenscheiben-Flanke (14) zu reduzieren, dadurch gekennzeichnet, daß der erste Ringkolben (50) an dem Gehäuse (44) gleitbar angeordnet ist und die Trennwand (40) an der Riemenscheiben-Flanke (14) und dem ersten Kolben (50) gleitbar angeordnet ist, und daß der Mechanismus auch einen zweiten Durchlaß (62) mit begrenztem Durchfluß umfaßt, um Fluid von der Kompensationskammer (54) weg zu richten.

2. Druckkompensierender Mechanismus nach Anspruch 1, dadurch gekennzeichnet, daß der zweite Durchlaß (62) mit begrenztem Durchfluß zentrifugal betätigte Ventilmittel (64) enthält zum Steuern des Fluidauslasses von der Kompensationskammer (54), wobei das Fluid in der Kompensationskammer (54) auf den ersten Ringkolben (50) entgegengesetzt zu der Druckkraft in der ersten Druckkammer (30) einwirkt, um mindestens teilweise Kompensation für den zentrifugal erzeugten Fluiddruck in den Druckkammern (30 und 28) zu schaffen.

**Revendications**

1. Mécanisme de compensation de pression destiné à un organe de commande à surface double dans une transmission rotative à courroie trapézoïdale, ayant des poulies réglables et une courroie d'entraînement, le mécanisme comprenant une joue mobile (14) de poulie comprenant un moyeu, un boîtier (44) monté afin qu'il tourne avec la joue de poulie (14) et fixé afin qu'il permette un déplacement linéaire relatif sur la joue de poulie (14), un premier piston annulaire (50) disposé de manière qu'il puisse coulisser par rapport au boîtier (44) et coopérant avec le boîtier (44) et la joue de poulie (14) à la formation d'une première chambre (30) sous pression, une paroi de séparation (40) disposée de manière qu'elle puisse coulisser sur la joue de poulie (14) et par rapport au premier piston (50) et coopérant avec celui-ci à la formation d'une chambre de compensation (54), une seconde chambre (28) sous pression formée entre une paroi annulaire (38) d'extrémité de la joue de poulie (14) et la paroi de séparation (40), la paroi d'extrémité (38) jouant le rôle d'un second piston annulaire, un dispositif (34, 32) à passage d'alimentation en fluide destiné à diriger du fluide sous pression vers la première et la seconde chambre (30 et 28) sous pression et vers le premier et le second piston annulaire (50 et 38) afin que la joue de poulie (14) subisse des forces provoquant son déplacement par rapport au boîtier (44), et un passage (60) de circulation de dimension réduite destiné à diriger un fluide vers la chambre de compensation (54), le passage (60) de circulation de dimension limitée communiquant avec le fluide sous pression se trouvant dans l'une (28) des chambres (30 et 28) sous pression, le fluide présent dans la chambre de compensation (54) étant à un niveau de pression déterminé en partie par la vitesse de rotation de la joue mobile de poulie (14) et agissant sur le premier piston annulaire (50) en sens opposé au sens d'action de la pression de fluide créée par effet centrifuge dans les chambres (30 et 28) sous pression, afin que les forces axiales appliquées à la joue mobile de poulie (14) soient réduites, caractérisé en ce que le premier piston annulaire (50) est disposé de manière qu'il puisse coulisser sur le boîtier (44), et la paroi de séparation (40) est disposée afin qu'elle puisse coulisser sur la joue de poulie (14) et sur le premier piston (50), et le mécanisme comporte aussi un second passage (62) de circulation de dimension limitée, destiné à diriger un fluide provenant de la chambre de compensation (54).

2. Mécanisme de compensation de pression selon la revendication 1, caractérisé en ce que le second passage (62) de circulation de dimension limitée comporte une soupape (64) à action centrifuge destinée à régler l'évacuation du fluide de la chambre de compensation (54), le fluide présent dans la chambre de compensation (54) agissant sur le premier piston annulaire (50) en sens opposé au sens d'action de la force due à la pression dans la première chambre (30) sous pression, afin que la pression du fluide créée par effet centrifuge soit compensée au moins partiellement dans les chambres (30 et 28) sous pression.